# EUROPÄISCHE PATENTSCHRIFT

(11) **EP 1 748 916 B1**
(45) Veröffentlichungstag und Bekanntmachung des Hinweises auf die Patenterteilung: **05.03.2008**
(21) Anmeldenummer: 05743445.8
(22) Anmeldetag: 23.05.2005
(51) Int. Cl.: B60S 1/34

(54) **ANTRIEBSVORRICHTUNG FÜR EINEN WISCHARM EINER SCHEIBENWISCHERANLAGE**
DRIVE DEVICE FOR A WIPER ARM OF A WINDSCREEN WIPER UNIT
DISPOSITIF D'ENTRAINEMENT POUR UN BRAS D'ESSUIE-GLACE D'UN SYSTEME ESSUIE-GLACE

(30) Priorität: 27.05.2004 DE 102004026552
(43) Veröffentlichungstag der Anmeldung: 07.02.2007
(73) Patentinhaber: VALEO SYSTEMES D'ESSUYAGE, 78321 La Verrière (FR)
(72) Erfinder: EGNER-WALTER, Bruno, 74076 Heilbronn (DE); EPPLE, Klaus, 74182 Obersulm (DE)
(74) Vertreter: Jahn, Wolf-Diethart
(86) Internationale Anmeldenummer: PCT/EP2005/005557
(87) Internationale Veröffentlichungsnummer: WO 2005/118362

(56) Entgegenhaltungen:
- DE-A1- 4 140 073
- US-A- 5 920 948
- US-A1- 2002 100 137
- PATENT ABSTRACTS OF JAPAN Bd. 011, Nr. 302 (M-629), 2. Oktober 1987 (1987-10-02) -& JP 62 094456 A (HONDA MOTOR CO LTD), 30. April 1987 (1987-04-30)

## Beschreibung

Die Erfindung bezieht sich auf eine Antriebsvorrichtung für einen Wischarm einer Scheibenwischeranlage gemäß Oberbegriff Patentanspruch 1.

Bekannt sind Antriebsvorrichtungen für Scheibenwischeranlagen, bei denen im Antriebsstrang zwischen einem Scheibenwischermotor und einem Wischerarm bzw. einer fahrzeugseitig gelagerten Wischerwelle ein Kreuzlenkergetriebe vorgesehen ist, über welches die Bewegung einer an einem Ende von einer Kurbel angetriebenen Antriebsstange der Scheibenwischeranlage in eine hin- und hergehende Drehbewegung, d. h. in eine reversierende Bewegung der Wischerwelle umgesetzt wird. Das Kreuzlenkergetriebe besteht dabei aus zwei Lenkern, die jeweils mit einem Ende an einer Schwinge und mit ihrem anderen Ende an dem durch die Kurbel bewegten Antriebsstange angelenkt sind. Mit der Schwinge ist die Wischerwelle fest verbunden, sodass diese und mit ihr auch der Wischarm um die Achse der Wischerwelle geschwenkt werden.

DE-A-4 140 073 offenbart den Oberbegriff des Anspruchs 1.

Nachteilig ist bei der bekannten Antriebseinrichtung u. a., dass der Wischarm eine reine Schwenkbewegung um die fahrzeugfeste Achse der Wischerwelle ausführt, was in vielen Fällen zu einem unbefriedigenden, vom Wischarm bzw. von einem dortigen Wischblatt überstrichenen Wischfeld führt. Dies gilt insbesondere auch deswegen, weil Fahrzeugscheiben, speziell auch Fahrzeugheckscheiben, heute vielfach aus Designgründen mit einer geringen Höhe und mit relativ großer Breite oder aber umgekehrt mit einer relativ großen Höhe im Vergleich zur Scheibenbreite ausgebildet werden, sodass eine reine kreisbogenförmige Schwenkbewegung des Wischarmes um die Mittelachse der Wischerwelle zu dem unbefriedigenden Wischfeld führt, bei dem ein nicht unerheblicher Teil der Fahrzeugscheibe überhaupt nicht von dem Wischarm bzw. von dem Wischblatt erfasst wird.

Aufgabe der Erfindung ist es, eine Antriebsvorrichtung aufzuzeigen, mit der bei der Möglichkeit einer preiswerten Fertigung und robusten sowie betriebssicheren Bauweise eine Vergrößerung und Anpassung bzw. Optimierung der Form des von dem bewegten Wischarm bzw. von dem dortigen Wischblatt erfassten Wischfeldes erzielt wird. Zur Lösung dieser Aufgabe ist eine Antriebsvorrichtung entsprechend dem Patentanspruch 1 ausgebildet.

Durch die erfindungsgemäße Ausbildung wird beim Betrieb der Scheibenwischeranlage der Wischarm um die Mittelachse seiner Befestigung an der zu dem Kreuzlenkergetriebe gehörenden Schwinge geschwenkt, und gleichzeitig wird die Mittelachse der Befestigung des Wischarmes auf einer Bahn bewegt. Insbesondere durch die Geometrie und/oder Orientierung bzw. Anordnung des Kreuzlenkergetriebes kann speziell die Form der Bahn, auf welcher die Mittelachse der Wischarmbefestigung bewegt wird, so beeinflusst werden, dass für den jeweiligen Anwendungsfall ein optimales Wischfeld erreicht ist, d. h. z. B. bei besonders breiten Fahrzeugscheiben ein in der Breite vergrößertes Wischfeld.

Die erfindungsgemäße Antriebsvorrichtung eignet sich insbesondere für Heckscheiben für Fahrzeuge, kann aber auch bei anderen Scheibenwischeranlagen eingesetzt werden. Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in perspektivischer Darstellung eine Ausführungsform des erfindungsgemäßen Kreuzlenkergetriebes zur Verwendung bei einer Scheibenwischeranlage eines Fahrzeugs, insbesondere bei einer Heckscheibenwischeranlage;
- Fig. 2: in vereinfachter Darstellung das Kreuzlenkergetriebe in einer Mittelstellung mit angedeutetem Wischarm für das nicht dargestellte Wischblatt der Scheibenwischeranlage;
- Fig. 3: die Position der Lenker des Kreuzlenkergetriebes und des Wischarmes sowie die Bewegungsbahn der Halterung für den Wischarm bei verschiedenen Drehstellungen der Wischerwelle;
- Fig. 4: in schematischer Darstellung das von dem Wischarm bzw. dem Wischblatt erfasste Wischfeld;
- Fig. 5: eine Darstellung ähnlich Figur 4, jedoch bei einem um 180° gewendeten Einbau des Kreuzlenkergetriebes;
- Fig. 6: die Bewegungsbahn der Halterung für den Wischarm bei dem um 180° gewendeten Einbau des Kreuzlenkergetriebes der Figur 5.

In den Figuren ist 1 ein Kreuzlenkergetriebe, welches im Wesentlichen aus einem bei der dargestellten Ausführungsform plattenförmigen Halteblech oder Lagerelement 2, aus zwei Lenkern 3 und 4 sowie aus einer Schwinge 5 besteht, an der der Wischarm 6 mit seinem Ende 6.1 verdrehungssicher befestigt ist.

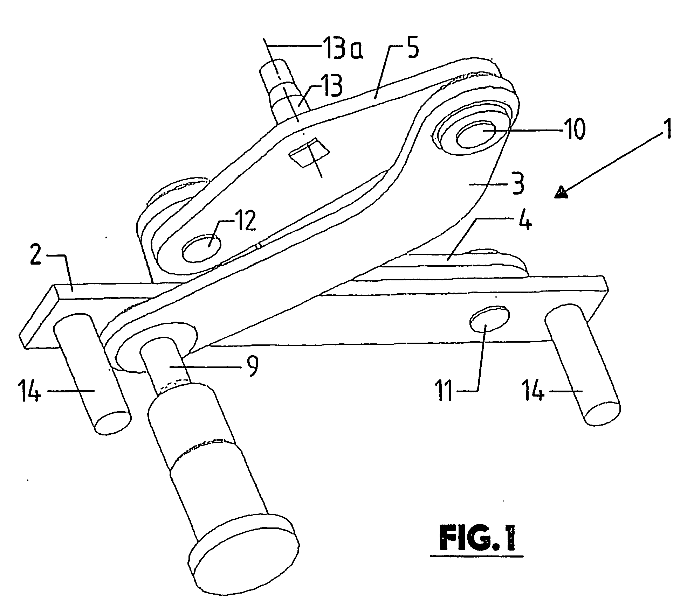

Das Kreuzlenkergetriebe 1 dient bei der in den Figuren 1 - 4 wieder gegebenen Ausführung dazu, das bei aktivierter Scheibenwischeranlage von dem Wischarm 6 bzw. von dem an diesem Wischarm befestigten Wischblatt überstrichene und zwischen den Linien 7.1 aufgespannte Wischfeld auf der Fahrzeugscheibe 8 in den seitlichen Bereichen zu vergrößern, um für eine flache Fahrzeugscheibe oder Heckscheibe 8 ein möglichst breites Wischfeld zu erreichen, und zwar im Vergleich zu einem zwischen den gestrichelten Linien 7 aufgespannten Wischfeld, welches herkömmlich durch eine reine Schwenkbewegung des Wischarmes um eine ortsfeste Mittelachse erzeugt wird.

Im Detail ist das Kreuzlenkergetriebe 1 so ausgebildet, dass der Lenker 3 mit seinem einen Ende mit der Welle 9 eines ansonsten nicht weiter dargestellten, reversierenden elektromotorischen Antriebs bzw. Scheibenwischermotors verbunden ist. Das andere Ende des Lenkers 3 ist über ein Gelenk 10 mit einem Ende der Schwinge 5 verbunden. Der Lenker 4 ist mit einem Ende über ein Gelenk 11 am Lagerelement 2 angelenkt und mit seinem anderen Ende über ein Gelenk 12 mit dem anderen Ende der Schwinge 5 verbunden. Zwischen den beiden Gelenken 10 und 12 ist ein Befestigungs- oder Halteelement 13 vorgesehen, welches bei der dargestellten Ausführungsform von einem drehfest an der Schwinge 5 verankerten Zapfen gebildet ist, an dem dann der Wischarm 6 mit seinem Ende 6.1 drehfest befestigt ist, und zwar z.B. in der selben Weise, wie dies bei einer herkömmlichen Befestigung an einer Wischerwelle erfolgt.

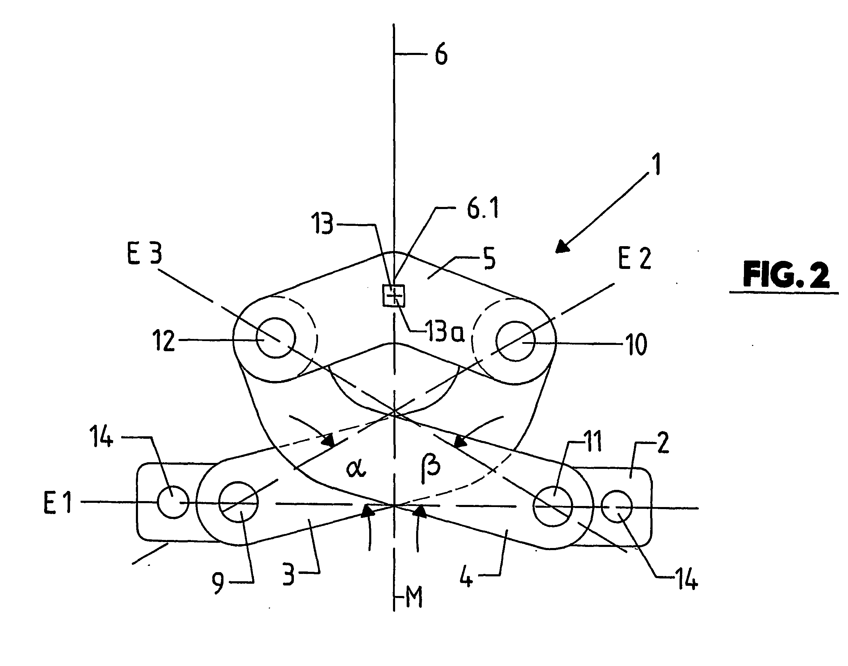

Die Achsen der Gelenke 10 - 12 und die Achse der Welle 9 sowie auch die Achse des Halteelementes 13 sind parallel zueinander und im Einbauzustand senkrecht oder etwa senkrecht zur Ebene der Fahrzeugscheibe 8 orientiert. Weiterhin ist die Anordnung so getroffen, dass in der in der Figur 2 dargestellten Mittelstellung des Wischarmes 6 und des Kreuzlenkergetriebes 1 die Achsen der Welle 9 und des Gelenks 11 in einer gemeinsamen, senkrecht zur Zeichenebene der Figur 2 verlaufenden Ebene E1 angeordnet sind, in der bei der dargestellten Ausführungsform auch die Längsachse des Lagerelementes 2 liegt.

Weiterhin sind die Achsen der Welle 9 und des Gelenks 10 in einer gemeinsamen, senkrecht zur Zeichenebene der Figur 2 verlaufenden Ebene E2 angeordnet, die in dieser Mittelstellung mit der Ebene E1 einen Winkel α kleiner als 90° einschließt, welcher sich zum Gelenk 11 hin öffnet. Die Achsen der Gelenke 11 und 12 liegen in einer gemeinsamen, senkrecht zur Zeichenebene der Figur 2 verlaufenden Ebene E3, die in dieser Mittelstellung mit der Ebene E1 einen Winkel β einschließt, der sich zu der Welle 9 hin öffnet und bei der dargestellten Ausführungsform in der Mittelstellung gleich dem Winkel α ist. Weiterhin ist das Befestigungselement 13 an der Schwinge 5 derart vorgesehen, dass sich dieses Befestigungselement in der Mittelstellung des Kreuzlenkergetriebes 1 an der dem Lagerelement 2 abgewandten Seite einer Verbindungslinie zwischen den Gelenken 10 und 12 befindet und das Befestigungselement 13 jeweils von beiden Gelenken 10 und 12 den selben Achsabstand aufweist und somit mit diesen Gelenken ein flaches, gleichschenkliges Dreieck definiert. Wie dargestellt, sind die Elemente des Kreuzlenkergetriebes 1 in mehreren Ebenen derart angeordnet, dass sich diese Elemente bei der Bewegung gegenseitig nicht behindern. Die Verbindungslinie zwischen den Gelenken 10 und 12 liegt in der Mittelstellung parallel zur Ebene E1.

In der Mittelstellung befinden sich die Gelenke 10 und 12 sowie auch das Befestigungselement 13 auf einer gemeinsamen Seite der Ebene E1, wobei die Gelenke 10 und 12 den selben kleineren Abstand und das Befestigungselement 13 einen etwas größeren Abstand von der Ebene E1 aufweisen. Weiterhin ist das Kreuzlenkergetriebe 1 in der Mittelstellung hinschtlich der Anordnung der Gelenk- und Schwenkachsen spiegelsymmetrisch zu einer parallel zu diesen Achsen angeordneten und die Längserstreckung des Wischarmes 6 einschließenden Mittelebene M ausgebildet.

Bei der dargestellten Ausführungsform ist das Kreuzlenkergetriebe 1 geometrisch durch folgende Maße definiert:

| | |
|---|---|
| Achsabstand zwischen Welle 9 und Gelenk 11 | 58 Einheiten |
| wirksame Länge des Lenkers 3 bzw. Achsabstand | |
| zwischen Welle 9 und Gelenk 10 | 55 Einheiten |
| wirksame Länge des Lenkers 4 bzw. Achsabstand | |
| zwischen den Gelenken 11 und 12 | 55 Einheiten |
| Achsabstand zwischen den Gelenken 10 und 12 | 36 Einheiten |
| Achsabstand zwischen den Gelenken 10 bzw. 12 und dem Befestigungselement 13 | 8 Einheiten |
| Winkel α in der Mittelstellung | 37° |
| Winkel β in der Mittelstellung | 37° |

wobei eine Einheit beispielsweise 1 mm ist.

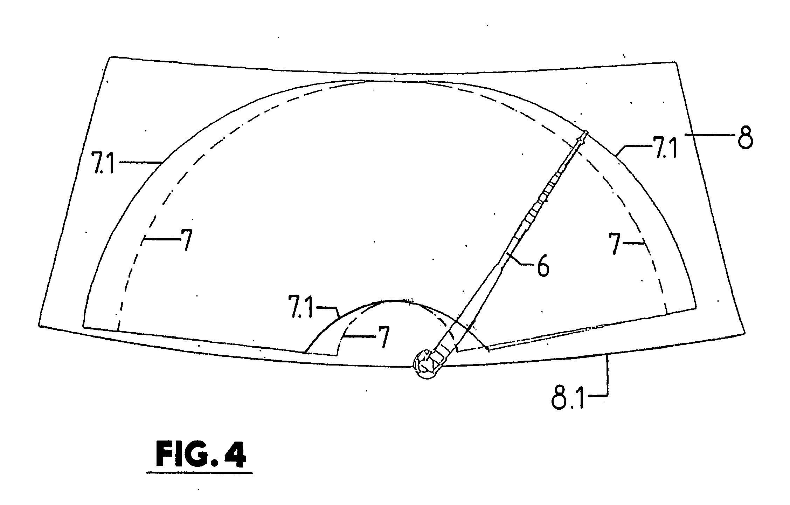

Zur Erzeugung des seitlich vergrößerten zwischen den Linien 7.1 aufgespannten Wischfeldes (Figur 4) wird das Kreuzlenkergetriebe 1 mit Hilfe von Befestigungselementen oder-bolzen 14 mit dem Lagerelement 2 zusammen mit dem die Welle 9 reversierend antreibbaren elektromotorischen Antrieb derart an dem Fahrzeug bzw. an dessen Karosserie unterhalb der unteren, horizontalen Begrenzung 8.1 der Fahrzeugscheibe 8 montiert, dass die Verbindungslinie zwischen der Welle 9 und dem Gelenk 11 parallel oder annähernd parallel zu der Begrenzung 8.1 orientiert ist und sich die Schwinge 5 an der der Fahrzeugscheibe 8 zugewandten Seite dieser Verbindungslinie befindet. Der Wischerarm 6 ist so an der Schwinge 5 befestigt, dass er sich ausgehend von dem Befestigungselement 13 senkrecht oder annähernd senkrecht zur Verbindungslinie zwischen den Gelenken 10 und 12 erstreckt, wie dies in der Figur 2 angedeutet ist. Ausgehend von dieser Mittelstellung ist der Lenker 3 durch den reversierenden Antrieb um die Achse der Welle 9 schwenkbar, und zwar im Sinne einer Vergrößerung und einer Verkleinerung des Winkels α, wobei eine der beiden Endstellungen bevorzugt die Parkstellung und die andere Endstellung die Umkehrstellung bilden.

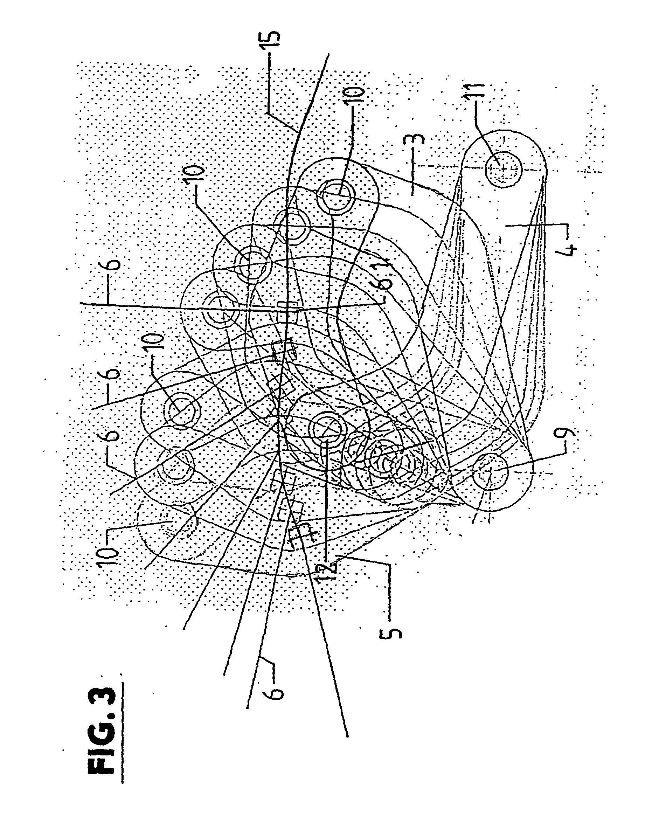

Bei eingeschaltetem elektromotorischen Antrieb wird der Lenker 3 reversierend um die Achse der Welle 9 geschwenkt, wodurch sich dann entsprechend der Figur 3 die Mittelachse 13a des Befestigungselementes 13 und damit das Ende 6.1 des Wischarmes 6 auf der in dieser Figur mit der Linie 15 angegebenen Bewegungsbahn bewegen, und zwar bei gleichzeitigem Schwenken des Wischarmes 6 um die nicht ortsfeste Mittelachse 13a. Die Bewegung des Wischarmes 6 setzt sich somit aus einer in etwa parallel zur unteren Begrenzung 8.1 der Fahrzeugscheibe 8 verlaufenden translatorischen Bewegung und einer Schwenkbewegung um die Mittelachse 13a zusammen.

In der Figur 3 sind für das Schwenken des Kreuzlenkergetriebes 1 aus der Mittelstellung in der einen Richtung auch die Lage des Wischarmes 6 sowie die Stellungen der Gelenke 10 und 12 angedeutet.

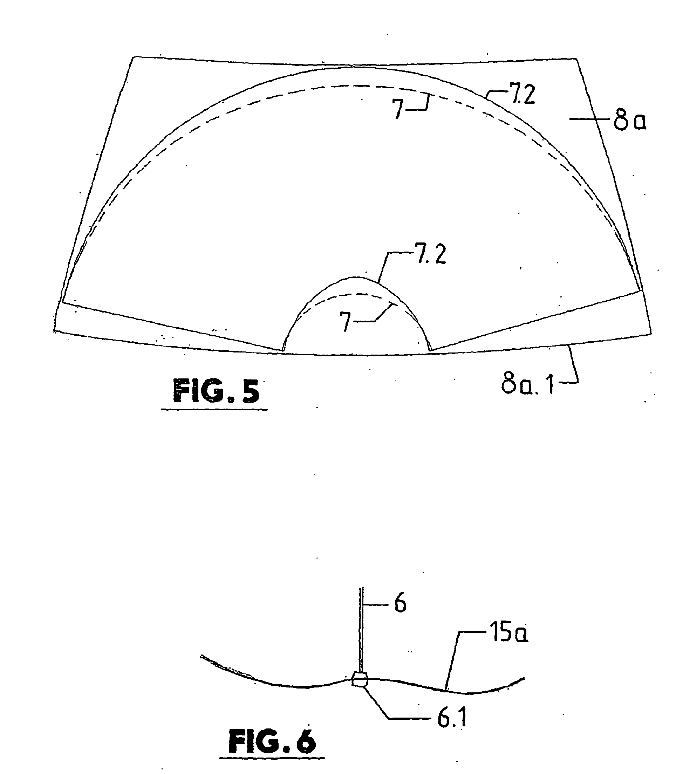

Die Figur 5 zeigt in einer ähnlichen Darstellung wie die Figur 4 ein anderes mit dem erfindungsgemäßen Kreuzlenkergetriebe 1 erzielbares, zwischen den Linien 7.2 aufgespanntes Wischfeld, welches für eine schmälere, aber höhere Fahrzeugscheibe 8a bestimmt ist. Das Kreuzlenkergetriebe 1 ist bei dieser Ausführungsform gewendet eingebaut, d. h. in der Art, dass sich in der Mittelstellung des Getriebes die Gelenke 10 und 12 sowie das Befestigungselement 13 auf der der unteren Begrenzung 8a.1 der Fahrzeugscheibe 8a abgewandten Seite der Verbindungslinie zwischen den Achsen der Welle 9 und des Gelenks 11 befinden. Hierbei ist der Wischarm 6 an der Schwinge 5 derart befestigt, dass er mit seiner Längserstreckung die Verbindungslinie der Gelenke 10 und 12 senkrecht oder annähernd senkrecht schneidet und auch die Verbindungslinien zwischen der Welle 9 und den Gelenken 10 bzw. 11. Das Ende 6.1 des Wischarmes 6 bzw. die Mittelachse 13a der Wischarmbefestigung bewegt sich somit auf der in der Figur 6 dargestellten Linie 15a, sodass sich durch die Kombination einer Schwenkbewegung des Wischarmes 6 um die Mittelachse 13a und einer gewissermaßen translatorischen Bewegung dieser Mittelachse 13a auf einer Bahn 15a eine Vergrößerung des zwischen den Linien 7.2 aufgespannten Wischfeldes im oberen Bereich gegenüber einem zwischen den gestrichelten Linien 7a aufgespannten Wischfeld ergibt, welches durch eine reine kreisbogenförmige Schwenkbewegung erzielbar ist.

Die Erfindung wurde voranstehend an Ausführungsbeispielen beschrieben. Es versteht sich, dass zahlreiche Änderungen sowie Abwandlungen mögliche sind, ohne dass dadurch der der Erfindung zugrunde liegende Erfindungsgedanke verlassen wird.

So ist es beispielsweise möglich, das Lagerelement 2 auch anders als plattenförmig auszubilden. Weiterhin ist es auch möglich, das Lagerelement 2 direkt an dem elektromotorischen Antrieb vorzusehen und/oder das Gelenk 11 an einem Gehäuse dieses Antriebs auszubilden. Die Welle 9 ist beispielsweise die Ausgangswelle eines reversierenden Scheibenwischer- oder Getriebemotors, kann aber auch eine fahrzeugseitig gelagerte Welle sein, die z. B. über einen Kurbelantrieb reversierend angetrieben ist.

### Bezugszeichenliste

- 1: Kreuzlenkergetriebe
- 2: Lagerelement
- 3,4: Lenker
- 5: Schwinge
- 6: Wischarm
- 6.1: Ende des Wischarmes
- 7, 7a: gestrichelte Linie
- 7.1, 7.2: Linie
- 8, 8a: Fahrzeugscheibe
- 8.1, 8a.1: untere Begrenzung der Fahrzeugscheibe 8 bzw. 8a
- 9: Welle
- 10, 11, 12: Gelenk
- 13: Befestigungselement
- 13a: Mittelachse
- 14: Befestigungsbolzen
- 15, 15a: Linie
- E1, E2, E3: Ebene
- M: Mittelebene
- α: Winkel zwischen E1 und E2
- β: Winkel zwischen E1 und E3

## Patentansprüche

1. Antriebsvorrichtung für einen Wischarm (6) einer Scheibenwischeranlage, mit einem Kreuzlenkergetriebe (1) in einem Antriebsstrang zwischen dem Wischarm (6) und einem Scheibenwischermotor, wobei das Kreuzlenkergetriebe (1) aus wenigstens zwei sich kreuzenden Lenkern (3, 4) besteht, von denen ein erster Lenker (3) mit einem Ende über ein erstes Gelenk (10) gelenkig mit einer Schwinge (5) verbunden und an seinem anderen Ende um eine erste Schwenkachse (9) schwenkbar vorgesehen ist und von denen ein zweiter Lenker (4) mit einem Ende über ein zweites Gelenk (12) im Abstand vom ersten Gelenk (10) an der Schwinge (5) angelenkt ist und an seinem anderen Ende um eine zweite, von einem dritten Gelenk (11) gebildete Schwenkachse schwenkbar ist, wobei die erste und zweite Schwenkachse einen festen, d. h. sich während der Betätigung der Antriebsvorrichtung nicht ändernden gegenseitigen Achsabstand aufweisen, und wobei der Wischarm (6) drehfest mit der Schwinge (5) verbunden ist, **dadurch gekennzeichnet, dass** die erste Schwenkachse von einer fahrzeugseitig gelagerten, vom Scheibenwischermotor reversierend antreibbaren und mit dem ersten Lenker (3) antriebsmäßig verbundenen Welle (9) gebildet ist, und dass das die zweite Schwenkachse bildende Gelenk (11) ein fahrzeugseitiges Gelenk ist.

2. Antriebsvorrichtung nach Anspruch 1, **dadurch gekennzeichnet, dass** das die zweite Schwenkachse bildende Gelenk (11) an einem am Fahrzeug montierbaren Lager (2) vorgesehen oder von einem am Fahrzeug montierbaren Lager gebildet ist.

3. Antriebsvorrichtung nach Anspruch 1 oder 2, **dadurch gekennzeichnet, dass** das die zweite Schwenkachse bildende Gelenk (11) an einem Gehäuse oder Lager des Scheibenwischermotors vorgesehen ist.

4. Antriebsvorrichtung nach einem der vorhergehenden Ansprüche, **dadurch gekennzeichnet, dass** die reversierend antreibbare Welle (9) die Ausgangswelle des Scheibenwischermotors oder eines Getriebes des Scheibenwischermotors ist.

5. Antriebsvorrichtung nach einem der vorhergehenden Ansprüche 1 - 3, **dadurch gekennzeichnet, dass** die die erste Schwenkachse bildende Welle (9) in einem fahrzeugseitigen Lager gelagert und über einen Kurbelantrieb antriebsmäßig mit dem Scheibenwischermotor verbunden ist.

6. Antriebsvorrichtung nach einem der Ansprüche 1 - 5, **dadurch gekennzeichnet, dass** sich in einer Stellung des Wischarmes (6) zwischen den Endstellungen der Wischarmbewegung die ersten und zweiten Gelenke (10, 12) auf einer der Fahrzeugscheibe zugewandten Seite einer Verbindungslinie zwischen der ersten und zweiten Schwenkachse angeordnet sind.

7. Antriebsvorrichtung nach einem der Ansprüche 1 - 5, **dadurch gekennzeichnet, dass** sich in einer Stellung des Wischarmes (6) zwischen den Endstellungen der Wischarmbewegung die ersten und zweiten Gelenke (10, 12) auf einer der Fahrzeugscheibe abgewandten Seite einer Verbindungslinie zwischen der ersten und zweiten Schwenkachse angeordnet sind.

## Claims

1. Drive device for a wiper arm (6) of a windscreen wiper unit, with a transverse link gear (1) in a drive train between the wiper arm (6) and a windscreen wiper motor, with the transverse link gear (1) consisting of at least two connecting rods (3, 4) crossing each other, of which a first connecting rod (3) is flexibly connected at one end via a first articulation (10) to a motion link (5) and at its other end is designed to pivot around a first pivoting axis (9) and of which a second connecting rod (4) is articulated to the motion link (5) via a second articulation (12) at a distance from the first articulation (10) and at its other end can be pivoted around a second pivoting axis formed by a third articulation (11), with the first and second pivoting axes having a fixed axis distance, i.e. an mutual axis distance that does not change during operation of the drive device and with the wiper arm (6) having a torque-proof connection with the motion link (5), **characterised in that** the first pivoting axis is formed by a driven shaft (9) mounted on the vehicle side drivable in reverse by the windscreen wiper motor and connected to the first connecting rod (3) and that the articulation (11) forming the second pivoting axis is an articulation on the vehicle side.

2. Drive device according to claim 1, **characterised in that** the articulation (11) forming the second pivoting axis is provided on a bearing (2) installable on the vehicle or is formed by a bearing installable on the vehicle.

3. Drive device according to claim 1 or 2, **characterised in that** the articulation (11) forming the second pivoting axis is provided on a housing or bearing of the windscreen wiper motor.

4. Drive device according to one of the above claims, **characterised in that** the reverse drivable shaft (9) is the output shaft of the windscreen wiper motor or a drive of the windscreen wiper motor.

5. Drive device according to one of the above claims 1-3, **characterised in that** the shaft (9) forming the first pivoting axis is mounted in a bearing on the vehicle side and is connected in the manner of a drive to the windscreen wiper motor via a crank drive.

6. Drive device according to one of claims 1-5, **characterised in that** in a position of the wiper arm (6) between the end positions of the wiper arm movement, the first and second articulations (10, 12) are arranged on a side of a connecting line facing towards the vehicle windscreen between the first and second pivoting axes.

7. Drive device according to one of claims 1-5, **characterised in that** in a position of the wiper arm (6) between the end positions of the wiper arm movement, the first and second articulations (10, 12) are arranged on a side of a connecting line facing away from the vehicle windscreen between the first and second pivoting axis.

## Revendications

1. Dispositif d'entraînement destiné à un porte-balai (6) d'un système d'essuie-glace, comportant un organe de direction cruciforme (1) dans un tronçon d'entraînement entre le porte-balai (6) et un moteur d'essuie-glace, moyennant quoi l'organe de direction cruciforme (1) est constitué d'au moins deux bielles de liaison (3, 4) qui se croisent, dont une première bielle de liaison (3) est reliée à une extrémité, par l'intermédiaire d'une première articulation (10) et donc de manière articulée à une bielle oscillante (5), et à son autre extrémité, est configurée de manière à pouvoir pivoter autour d'un premier axe de pivotement (9), et dont une deuxième bielle de liaison (4) est articulée à une extrémité, par l'intermédiaire d'une deuxième articulation (12) à une certaine distance de la première articulation (10), sur la bielle oscillante (5), et à son autre extrémité, peut être amenée à pivoter autour d'un deuxième axe de pivotement formé par une troisième articulation (11), moyennant quoi les premier et deuxième axes de pivotement présentent une distance axiale mutuelle fixe, à savoir qui ne varie pas pendant l'actionnement du dispositif d'entraînement, et moyennant quoi le porte-balai (6) est relié de manière résistante à la rotation à la bielle oscillante (5), **caractérisé en ce que** le premier axe de pivotement est formé par un arbre (9) logé du côté véhicule, pouvant être entraîné selon un mouvement de va-et-vient par le moteur d'essuie-glace et relié en termes d'entraînement à la première bielle de liaison (3), et **en ce que** l'articulation (11) formant le deuxième axe de pivotement est une articulation du côté véhicule.

2. Dispositif d'entraînement selon la revendication 1, **caractérisé en ce que** l'articulation (11) formant le deuxième axe de pivotement est prévue sur un palier (2) pouvant être monté sur le véhicule ou est formée par un palier pouvant être monté sur le véhicule.

3. Dispositif d'entraînement selon la revendication 1 ou 2, **caractérisé en ce que** l'articulation (11) formant le deuxième axe de pivotement est prévue sur un boîtier ou sur le palier du moteur d'essuie-glace.

4. Dispositif d'entraînement selon l'une quelconque des revendications précédentes, **caractérisé en ce que** l'arbre (9) pouvant être entraîné selon un mouvement de va-et-vient est l'arbre de sortie du moteur d'essuie-glace ou un engrenage du moteur d'essuie-glace.

5. Dispositif d'entraînement selon l'une quelconque des revendications précédentes 1 à 3, **caractérisé en ce que** l'arbre (9) formant le premier axe de pivotement est logé dans un palier du côté véhicule ou est relié en termes d'entraînement grâce à un entraînement de type manivelle au moteur d'essuie-glace.

6. Dispositif d'entraînement selon l'une quelconque des revendications 1 à 5, **caractérisé en ce que**, dans une position du porte-balai (6) entre les positions finales du déplacement du porte-balai, les première et deuxième articulations (10, 12) sont disposées d'un côté orienté vers la vitre du véhicule d'une ligne de liaison entre le premier et le deuxième axes de pivotement.

7. Dispositif d'entraînement selon l'une quelconque des revendications 1 à 5, **caractérisé en ce que**, dans une position du porte-balai (6) entre les positions finales du déplacement du porte-balai, les première et deuxième articulations (10, 12) sont disposées sur un côté opposé à la vitre du véhicule d'une ligne de liaison entre le premier et le deuxième axes de pivotement.
